# EUROPÄISCHE PATENTSCHRIFT

(11) **EP 3 458 217 B1**
(45) Veröffentlichungstag und Bekanntmachung des Hinweises auf die Patenterteilung: **05.01.2022**
(21) Anmeldenummer: 17724369.8
(22) Anmeldetag: 19.05.2017
(51) Int. Cl.: B23B 51/10, B23B 31/40

(54) **RÜCKWÄRTSSENKWERKZEUG**
REVERSE COUNTERSINKING TOOL
OUTIL DE CHANFREINAGE ARRIÈRE

(30) Priorität: 20.05.2016 DE 102016109309
(43) Veröffentlichungstag der Anmeldung: 27.03.2019
(73) Patentinhaber: Gühring KG, 72458 Albstadt (DE)
(72) Erfinder: REBHOLZ, Felix, 72510 Stetten-Frohnstetten (DE)
(74) Vertreter: Gleim, Christian Ragnar
(86) Internationale Anmeldenummer: PCT/EP2017/062141
(87) Internationale Veröffentlichungsnummer: WO 2017/198833

(56) Entgegenhaltungen:
- EP-A1- 0 911 103
- US-A1- 2004 179 905

## Beschreibung

Die vorliegende Erfindung betrifft ein mehrteiliges Rückwärtssenkwerkzeug zur Senken und / oder Entgraten von Durchgangsbohrungen in geraden, abgewinkelten oder gekrümmten Oberflächen.

### STAND DER TECHNIK

Aus dem Stand der Technik sind Senkwerkzeuge zur Herstellung von Senkvertiefungen bekannt, die einen Fräskopf umfassen, und die mittels Drehung eines Werkzeugschafts Senkvertiefungen für Schrauben oder Nieten in Durchgangsbohrungen von Bauteilen einfräßen können oder zum Entgraten dienen. Das Senken ist ein Bohrverfahren und dient dem Entgraten und der Erzeugung profilierter oder planer Absätze in fertigen Bohrungen.

Des Weiteren sind aus dem Stand der Technik Rückwärtssenkwerkzeuge bekannt, bei denen ein Werkzeugschaft durch eine Durchgangsbohrung eines Bauteils durchgesteckt wird, wobei ein am Ende befestigte Bohrkrone mit Schneidflächen in Richtung des Werkzeugschafts angeordnet ist, um als Rückwärtssenkwerkzeug durch Ziehen des Werkzeugschafts in Richtung eines antreibenden Drehwerkzeuges eine derartige Senkvertiefung herzustellen.

Bei gekrümmten oder abgewinkelten Oberflächen wie beispielsweise Oberflächen einer Fahrzeugkarosserie oder einem Flugzeugflügel ergibt sich das Problem, dass bei einer ungenügenden Senktiefe keine runden, sondern ovale Löcher entstehen, so dass eine konturlos an die Oberfläche angepasste Niete oder ein Schraubkopf nicht vollständig im Senkloch aufgenommen werden kann und somit keine homogene, vertiefungs- und erhöhungslose Oberfläche geschaffen werden kann. Aus diesem Grund ist es notwendig, insbesondere bei einer gekrümmten oder schräg zu einer Durchgangsbohrung verlaufenden Oberfläche eine zusätzliche Nachbearbeitung vorzunehmen, so dass Nietabsenkungen weder zu tief noch unzureichend tief gebohrt sind, um beim Einsetzen einer Niete oder eines Schraubkopfes eine homogene Oberfläche bereitstellen zu können.

Die EP 0 911 103 A1 offenbart ein Senkwerkzeug nach dem Oberbegriff des Anspruchs 1.

Die DE 10 2010 014 022 A1 offenbart ein Senkwerkzeug sowie ein Verfahren zum Senken eines Bohrloches in einem Werkstück. Das Senkwerkzeug umfasst einen Fräskopf mit Anschlag zur Definition einer Senktiefe sowie einen Werkzeugschaft mit Kupplungsabschnitt zum Verbinden mit einer Werkzeugmaschine oder eines weiteren Schaftes als Verbindung mit einer Werkzeugmaschine. Der Kupplungsabschnitt ist als Innensechskant oder Sechskant ausgebildet. Der Kupplungsabschnitt befindet sich auf der gegenüberliegenden Seite bezüglich des Fräskopfes am Senkwerkzeug. Vor dem Entgraten oder Senken muss das Senkwerkzeug mit dem Fräskopf und dem Werkzeugschaft durch die Durchgangsbohrung gesteckt und an der Werkzeugmaschine eingespannt werden, wofür die Kupplung der Werkzeugmaschine geöffnet und geschlossen werden muss. Der Verbindungsabschnitt legt demnach auf der Seite der Werkzeugmaschine und das Gesamtwerkzeug muss von der zu bearbeitenden Werkstückoberfläche durch die Durchgangsbohrung geführt werden, wodurch die Gefahr einer Beschädigung und Verkratzung dieser Oberfläche auftritt.

Die DE 10 2013 108 232 A1 offenbart ein Rückwärtssenkwerkzeug zur Herstellung von Senken mit definierter Tiefe in gekrümmten oder geraden Oberflächen. Das Rückwärtssenkwerkzeug umfasst eine Fräskrone sowie eine Anschlaghülse und einen Werkzeugschaft. Der Werkzeugschaft ist mit der Fräskrone verbunden und wird von der Seite, an welcher die Senke eingebracht werden soll, durch die Durchgangsbohrung gesteckt und von der gegenüberliegenden Seite mit einer Werkzeugmaschine verbunden, so dass ebenfalls Ein- und Ausspannvorgänge an der Werkzeugmaschine notwendig werden und das Rückwärtssenkwerkzeug von der Bearbeitungsseite aus in die Durchgangsbohrung eingesetzt und wieder entnommen werden muss.

Die US 1 119 528 A zeigt ein Werkzeug zum Rückwärtssenken oder zur Oberflächenbearbeitung von Werkstücken. Der Rückwärtssenker ist als Plansenker ausgebildet, im Falle der Oberflächenplanbearbeitung kann das Werkstück von der werkzeugseitig abgewandten Seite bearbeitet werden. Der Schaft kann in eine Spindel eingespannt werden und umfasst im Innern einen Splint, der von der Seite der Werkzeugmaschine und über einen Betätigungsring in Längsrichtung des Werkzeugs verschoben werden kann, sowie in eine Ausgangsposition selbstständig durch eine Feder rückstellbar ist. Die Verbindung zwischen Betätigungsring und Splint erfolgt über einen radialen Querstift. Am Werkzeugkopf werden durch den radial aufweitenden Splint in einer Befestigungsposition zumindest zwei Kugeln derart nach außen verrückt, dass ein Rückwärtssenkkopf drehfest gehalten werden kann. Der Splint weist an der Werkzeugkopfseite eine radiale Verjüngung auf, sodass durch Verschieben des Splintes in Längsrichtung des Werkzeugs die Kugeln nach Innen verrückt werden können und der Senkkopf entfernt werden kann. Ebenso kann an den Schaft ein Vorwärts-Plansenker oder ein Schneidkopf für beidseitige Bearbeitung angebracht werden. Durch die Kugelbefestigung des Rückwärtssenkkopf am Schaft wird eine mehrteilige und teure Ausführung des Verbindungsmechanismus notwendig. Der Werkzeugkopf ist formschlüssig an den Durchmesser des Werkzeugschaftes angepasst, so dass beim Wechsel des Durchmessers des Werkzugschafts auch ein Werkzeugkopf mit verändertem Innendurchmesser benötigt wird.

In der US 3,545,311 B wird ein handbetriebenes Rückwärtssenkwerkzeug offenbart. Über eine Drehbewegung des Handgriffs kann eine Bohrung rückwärtig gesenkt werden. Der Senkkopf ist vergleichbar zur US 1 119 528 A über Kugeln an einem Schaft gelagert, wobei jedoch der Schaft einen geringeren Durchmesser als die zu bearbeitenden Bohrung aufweist. Der Rückwärtssenker wird über eine konische Scheibe in der Bohrung zentriert. Ein Lösen des Werkezugskopfs kann über ein Drücken des Splintes am Handgriff erfolgen. Das Senkwerkzeug ist aufgrund der konischen Scheibe ebenso für unterschiedliche Bohrungsdurchmesser geeignet. Das Werkzeug ist handbetrieben, sodass eine Senkungsgeschwindigkeit und Senktiefe immer von der Steigung des Gewindes abhängig ist. Weiterhin erfolgt die Betätigung des Splintes zum Lösen des Senkkopfes über ein Drücken des Splints im Endbereich des Handgriffs.

Aus dem Stand der Technik ergibt sich das Problem, dass bekannte Rückwärtssenkwerkzeuge eine Vielzahl von Ein- und Ausspannvorgängen an der Werkzeugmaschine erfordern. Des Weiteren muss jeweils das Gesamtwerkzeug aus der Durchgangsbohrung eingesetzt und wieder entnommen werden. Eine Änderung des Senkradius erfordert die Bereitstellung eines weiteren Rückwärtssenkwerkzeugs. Beim Wechsel des Werkzeugschaftdurchmessers ist auch die Bereitstellung eines anderen Werkzeugkopfs erforderlich. Schließlich ergibt sich aus dem vorgenannten Stand der Technik das Problem, dass bei Verschleiß des Fräskopfes das komplette Senkwerkzeug mit Werkzeugschaft und Kupplungsabschnitt ausgetauscht werden muss, wodurch die Bearbeitungskosten erhöht werden. Somit ist es Aufgabe der Erfindung, ein Senkwerkzeug vorzuschlagen, das die oben dargestellten Probleme des Stands der Technik lösen kann.

Des Weiteren ist es Aufgabe der Erfindung, ein einfach herzustellendes, kostengünstiges und für einen dauerhaften sowie flexiblen Einsatz für Durchgangsbohrungen mit unterschiedlichen Durchmessern eingerichtetes Senkwerkzeug bereitzustellen.

Die vorgenannte Aufgabe wird durch ein Senkwerkzeug, insbesondere ein mehrteiliges Rückwärtssenkwerkzeug nach dem unabhängigen Anspruch 1 sowie nach dem erfindungsgemäßen Verfahren gelöst. Vorteilhafte Ausbildungen sind Gegenstand der Unteransprüche.

### OFFENBARUNG DER ERFINDUNG

Gegenstand der Erfindung ist ein mehrteiliges Senkwerkzeug, ausgebildet als mehrteiliges Rückwärtssenkwerkzeug, zur Einspannung in eine Werkzeugmaschine, zum Senken oder Entgraten von Durchgangsbohrungen in geraden, abgewinkelten oder gekrümmten Oberflächen, wobei die Oberflächen auf einer der Werkzeugmaschine abgewandten Seite angeordnet sind, umfassend einen Werkzeugkopf mit einer Fräskopf mit zumindest einer, insbesondere vier Schneidflächen sowie einem Werkzeugschaft mit einem Einspannabschnitt zur Einspannung in einer Werkzeugmaschine und einem Führungsabschnitt zur Führung in einer Durchgangsbohrung mit einem Betätigungselement. Dabei ist der Werkzeugkopf und der Werkzeugschaft lösbar miteinander verbunden, wobei ein Lösen von Werkzeugkopf und Werkzeugschaft durch eine Aktuatorbewegung des Betätigungselements erfolgt und der Fräskopf im verbundenen Zustand verdrehsicher gegenüber dem Werkzeugschaft gelagert ist.

Es wird erfindungsgemäß vorgeschlagen, dass der Führungsabschnitt an einem dem Werkzeugkopf zugewandten axialen Ende ein im Durchmesser vom Führungsabschnitt abgesetztes Verbindungselement aufweisen, wobei das Verbindungselement in den Werkzeugkopf, bevorzugt in den Fräskopf, eingreift um die lösbare Verbindung herzustellen. Das Verbindungselement dient als Kontaktfläche und Verschlussmechanik zwischen Werkzeugkopf und Werkzeugschaft und kann eine lösbare formschlüssige oder kraftschlüssige Verbindung der beiden Elemente herstellen. Das Verbindungselement ist im Durchmesser abgesetzt, dies bedeutet, dass es einen kleineren, größeren oder auch gleichen Durchmesser wie der Führungsabschnitt aufweisen kann, jedoch kein nahtloser Übergang zwischen dem Führungsabschnitt und dem Verbindungselement existiert, sondern eine Absetzung des Durchmessers im Übergangsbereich, so dass das Verbindungselement, dass im Wesentlichen federnd elastisch sich radial gegenüber dem Führungsabschnitt aufweiten kann, eine radiale Stufe oder Einschnürung im Übergangsbereich zum Führungsabschnitt aufweist. Diese lösbare Verbindung des Verbindungselements kann über das Betätigungselement gelöst oder gesichert werden. Die lösbare Verbindung kann mechanischer Art sein und durch einfädeln oder einstecken erfolgen. Das Verbindungselement kann als eine Art Zapfen und / oder als Hohlelement ausgebildet sein. Der Zapfen oder das Hohlelement können einen kreisförmigen, elliptischen, teilkreisförmigen, rechteckigen oder trapezartigen Querschnitt aufweisen. Ebenso kann der Zapfen oder das Hohlelement als Vieleck ausgebildet sein. Das Verbindungselement ist bevorzugt auf der Mittelachse des Senkwerkzeugs angeordnet und kann ebenso rotationssymmetrisch ausgebildet sein. Hierbei bildet das Verbindungselement die äußerste Kontaktfläche zwischen Werkzeugschaft und Werkzeugkopf aus.

Erfindungsgemäß weist das Verbindungselement einen radialen Aufweitungsbereich umfassen, dessen Radius durch das Betätigungselement veränderbar ist. Dieser Aufweitungsbereich kann über das Betätigungselement geändert werden, sodass durch ein Vergrößern oder Verkleinern des Radius der Werkzeugkopf am Werkzeugschaft kraft- und/oder formschlüssig verankert oder gelöst werden kann.

Dies kann über eine Art Zangen- oder Rastelement als Verbindungselement erreicht werden. Durch die im Durchmesser abgesetztes Verbindungselement zum Führungsabschnitt entsteht eine radiale Einschnürung zumindest im Übergangsbereich zwischen Führungsabschnitt und Verbindungselement. Hierdurch kann das Verbindungselement federelastisch gegenüber dem Führungsabschnitt durch das Betätigungselement radial aufgeweitet werden, um einen eingesetzten Werkzeugkopf zu verklemmen oder verpressen und so drehfest und formschlüssig mit dem Führungsabschnitt zu verbinden. Das Verbindungselement kann radial verkleinert gegenüber dem Führungsabschnitt ausgeführt sein und dient somit als Aufnahmeadapter für den Werkzeugkopf. Das Verbindungselement kann auch bei Werkzeugschäften mit unterschiedlichen Durchmessern stets den gleichen Durchmesser und dieselben mechanischen Dimensionen aufweisen und somit eine Standardaufnahme für Werkzeugköpfe ausbilden, die an Führungsabschnitte von unterschiedlichen Werkzeugschäften aufgesetzt werden können. Somit erreicht das erfindungsgemäße Senkwerkzeug den Vorteil, dass der Werkzeugkopf an verschiedene Werkzeugschäfte mit unterschiedlichen Durchmessern über einen identisch ausgeführten Verbindungsabschnitt anbringbar ist.

Mit anderen Worten wird ein Senkwerkzeug vorgeschlagen, das ein Austauschen des Werkzeugkopfes mit den Schneidelementen ermöglicht, wobei der Werkzeugschaft für unterschiedliche Werkzeugköpfe weiterverwendet werden kann. Dazu umfasst der Werkzeugschaft ein manuell bedienbares Betätigungselement, das die Verbindung zwischen Werkzeugkopf und Werkzeugschaft in einer Freigabestellung freigeben oder in einer Verschlussstellung sperren kann. Im freigegebenen Zustand kann der Werkzeugkopf an den Werkzeugschaft montiert oder demontiert werden Im gesperrten Zustand wird der Werkzeugkopf am Werkzeugschaft gelagert, wobei zumindest der Fräskopf verdrehsicher gegenüber dem Werkzeugschaft fixiert wird. Somit ist das Einbringen von Senken oder das Entgraten von Durchgangsbohrungen durch eine Rotation des Werkzeugschaftes problemlos möglich. Durch einen auswechselbaren Fräskopf, der durch das am Führungsabschnitt des Werkzeugschafts angeordneten Betätigungselements gelöst werden kann, kann dieser an verschiedenen Werkzeugschäften mit unterschiedlichen Durchmessern angebracht werden, bzw. an einem Werkzeugschaft können Fräsköpfe mit verschiedenen Radien angeordnet werden. Dies ist besonders vorteilhaft, wenn der Werkzeugschaft an die Geometrie der Durchgangsbohrung angepasst werden soll wie beispielsweise beim Entgraten oder Senken von Durchgangsbohrungen in gekrümmten Oberflächen, wenn möglich kreisrunde Senken erzeugt werden sollten. Durch die Anpassung des Werkzeugschaftes an den Durchmesser der Durchgangsbohrung kann das Senkwerkzeug parallel in der Durchgangsbohrung geführt werden und ein Senken orthogonal zur Längsachse der Durchgangsbohrung durchgeführt werden. Das Lösen des Werkzeugkopfes vom Werkzeugschaft erfolgt über das Betätigungselement. Das Betätigungselement ist am Werkzeugschaft angebracht. Ein Lösen des Werkzeugkopfes, der auf der der Werkzeugmaschine abgewandten Seite des Werkstücks angebracht ist, ist folglich von der Seite der Werkzeugmaschine möglich. Eine Bedienperson, die sich auf der Seite der Werkzeugmaschine befindet, kann demnach das Lösen des Werkzeugkopfes vom Werkzeugschaft durchführen, so dass ein Ein- und Ausspannen des Werkzeugschafts aus der Werkzeugmaschine vermieden werden kann, so dass Spannvorrichtung der Werkzeugmaschine entlastet wird. Die Verbindungsstelle zwischen Werkzeugkopf und Werkzeugschaft befindet sich im eingebauten Zustand in einer Durchgangsbohrung bevorzugt näher an der Oberfläche, die der Werkzeugmaschine abgewandt ist, als an einer Oberfläche, die der Werkzeugmaschine zugewandt ist. Dadurch ist der Werkzeugkopf besonders materialsparend ausgebildet, da er keinen Schaftabschnitt oder zusätzliche Verbindungselemente zur Verbindung mit dem Werkzeugschaft enthält. Beim Austauschen eines verschlissenen Werkzeugkopfes ist demnach der Materialverbrauch besonders gering, da die Baugröße des Werkzeugkopfes auf wenige Bauelemente begrenzt ist. Das Verbindungselement ist bei unterschiedlichen Werkzeugschäften stets identisch ausgeführt, und im Durchmesser vom Werkzeugschaft abgesetzt. Es ist dabei federnd elastisch im Radius durch das Betätigungselement aufweitbar und bietet damit eine Standardaufnahme für eine Vielzahl von Werkzeugköpfen, die an Werkzeugschäften mit unterschiedlichen Durchmessern angebracht werden können.

Erfindungsgemäß ist das Betätigungselement zwischen Einspannabschnitt und Führungsabschnitt angeordnet und manuell betätigbar. Diese Anordnung ermöglicht es einer Bedienperson, das Betätigungselement auch bei bereits in der Durchgangsbohrung eingeführten Werkzeugschaft zu bedienen, wobei der Werkzeugschaft in der Werkzeugmaschine eingespannt, und somit nach Einführen des Werkzeugschafts in die Durchgangsbohrung den Werkzeugkopf auf der abgewandten Werkstückoberfläche aufzusetzen und von der Werkzeugmaschinenseite zu verriegeln. Auch kann der Werkzeugkopf nach Einbringen einer Senke oder nach einem Entgraten vom Werkzeugschaft gelöst werden, während der Werkzeugschaft weiterhin eingespannt in einer Werkzeugmaschine verbleibt.

In einer weiteren vorteilhaften Ausführungsform kann das Betätigungselement in der Aktuatorbewegung längsaxial von einer Verschlussstellung in eine Freigabestellung verschieblich sein, und bevorzugt in der Verschlussstellung federgelagert und selbstrückstellend aus der Freigabestellung in die Verschlussstellung überführbar ist. Eine Bedienperson nimmt somit eine Entriegelungsbewegung des Betätigungselements in Richtung der Werkzeugmaschine vor, um das Betätigungselement von einer Verschluss- in eine Freigabestellung zu bringen. Dies stellt eine ergonomisch vorteilhafte Bewegungsrichtung für eine Bedienperson dar, da dies der Entnahmerichtung von Werkzeugen aus einer Werkzeugmaschine entspricht. Durch die Federlagerung kann die Ausgangsposition, die sogenannte Verschlussposition, des Betätigungselements durch ein einfaches Loslassen erneut erreicht werden.

In einer weiteren vorteilhaften Ausführungsform kann der Werkzeugkopf einen Anschlag zur Definition einer Senkungstiefe umfasst, wobei der Anschlag frei verdrehbar und bevorzugt axial verstellbar gegenüber dem Fräskopf gelagert ist. Der Anschlag kann an der Oberfläche, die beim Einsatz des Senkwerkzeugs in Kontakt mit einer Oberfläche eines Werkstücks steht, eben ausgebildet sein oder Aussparungen zum Entlassen von Bearbeitungsspänen und zur besseren Kühlung enthalten. Der Anschlag kann über ein Lager, wie beispielsweise ein Wälz- oder Gleitlager gelagert sein. Bevorzugt erfolgt die Lagerung am Fräskopf in einer Position axialversetzt zu den Schneidflächen.

In einer weiteren vorteilhaften Ausführungsform kann der Werkzeugkopf an seiner Stirnseite eine Verstellmutter, insbesondere eine Rändelmutter an einer dem Fräskopf abgewandten Seite umfasst, mittels der eine Anschlagtiefe des Anschlags einstellbar ist. Die Verstellmutter bzw. Rändelmutter ist bevorzugt an der gegenüberliegenden Seite bezüglich der Schneidflächen am Werkzeugkopf angebracht, auf einem Verstellgewinde des Werkzeugkopfs verschraubt. Nach einer Einstellung einer Senkungstiefe durch Verschrauben der Verstellmutter kann diese zur permanenten Senkungstiefenfestlegung mit dem Werkzeugkopf, bevorzugt mit dem Fräskopf, verklebt oder punktverschweisst werden. Somit ist keine Rotation der Verstellmutter relativ zum Fräskopf mehr möglich und eine gleichbleibende Senkungstiefe festgelegt. Alternativ kann die Verstellmutter mit einer Kontermutter drehfest auf dem Verstellgewinde des Werkzeugkopfs drehfest arretiert werden. Die Verstellmutter dient zum Greifen des Werkzeugkopfes durch eine Bedienperson bei der Montage oder Demontage am Werkzeugschaft. Diese ist zur verbesserten Handhabungshaptik bevorzugt als eine Rändelmutter oder mit einer strukturierten Oberfläche ausgeführt.

In einer weiteren vorteilhaften Ausführungsform kann durch eine axiale Relativbewegung das Betätigungselements aus einer, bevorzugt federgelagerten, Verschlussstellung entgegen dem Führungsabschnitt in Richtung Einspannabschnitt in eine Freigabestellung verfahrbar sein, bei der der Werkzeugkopf von dem Werkzeugschaft gelöst werden kann. Eine Bedienperson muss eine Bewegung in Richtung der Werkzeugmaschine ausführen, um den Werkzeugkopf vom Werkzeugschaft zu lösen. Durch die Federlagerung kann die Ausgangsposition, die Verschlussstellung, des Betätigungselements durch Loslassen erneut erreicht werden, so dass die Betriebssicherheit erhöht ist, da das Betätigungselement selbstständig in die Verschlussstellung überführt wird. Bei einem Wechsel des Werkzeugkopfes kann eine Bedienperson das Betätigungselement zum Lösen und erneuten Aufstecken in der Freigabestellung belassen und anschließend loslassen. Durch das Loslassen verschiebt sich das Betätigungselement in die Verschlussposition zurück, wodurch der Werkzeugkopf am Werkzeugschaft verankert wird. Der Werkzeugkopf kann am Werkzeugschaft mit nur einer Bewegung gelöst und wieder verankert werden.

In einer weiteren vorteilhaften Ausführungsform kann das Verbindungselement, insbesondere der radiale Aufweitungsbereich als Hohlzylinder, mindestens einfach geschlitzter Hohlzylinder, bevorzugt als vierfach geschlitzter Hohlzylinder und / oder als Spreizelement ausgebildet sein. Somit wir ein Zwischenraum im Innern des Verbindungselements frei gehalten, in den weitere Bauelemente eingebracht werden können, die eine Verbindung zum Betätigungselement herstellen. Bei einer Ausführungsform als geschlitzter Hohlzylinder können die einzelnen Elemente, die durch die geschlitzte Ausführung entstehen, gegeneinander zumindest minimal bewegt werden. Dies ist besonders vorteilhaft, da der Querschnitt des Verbindungselements dadurch optional vergrößert oder verkleinert werden und als eine Art Federelement bzw. Verschlusselement fungieren kann. Das Verbindungselement kann an den einzelnen Elementen des geschlitzten Hohlzylinders jeweils mindestens einen Wulst aufweisen, der zur formschlüssigen Verankerung des Verbindungselements in dem Werkzeugkopf dient. Ebenso ist es denkbar, dass lediglich ein Element des geschlitzten Hohlzylinders einen Wulst aufweist. Der Wulst ist bevorzugt auf der Außenseite des Holzylinders angebracht.

In einer weiteren vorteilhaften Ausführungsform kann in das Verbindungselement ein stabförmiges Axialaktuatorelement eingreifen, das mit dem Betätigungselement über ein Radialaktuatorelement in einem axialverschieblichen Wirkeingriff steht. Das Axialaktuatorelement weist bevorzugt einen endseitigen Querschnitt auf, die durch einen axialen Hohlraum in dem Verbindungselement freigegeben wird. Dies kann beispielsweise der Hohlraum sein, der bei Ausführung des Verbindungselements als Hohlzylinder oder geschlitzter Hohlzylinder entsteht. Bevorzugt ist der Zwischenraum zwischen diesem Hohlraum und dem Axialaktuatorelement derart gering, dass kaum eine Verschiebung der Elemente des Verbindungselements in Richtung Mittelachse erfolgen kann, wodurch kaum eine bzw. nahezu keine Verkleinerung des Querschnitts des Verbindungselements erfolgen kann. Das Axialaktuatorelement ist frei verschiebbar in diesem Zwischenraum, wobei der Verschiebungsweg durch eine axiale Beweglichkeit des Radialaktuatorelements, das mit dem Betätigungselement verbunden ist begrenzt wird. Dies wird beispielsweise dadurch erreicht, dass das Radialaktuatorelement in einem Führungsschlitz in dem Werkzeugschaft geführt wird, wobei die Führungsschlitzlänge und Ausrichtung den Verfahrweg des Axialaktuatorelements bestimmt. Das Radialaktuatorelement kann an das Axialaktuatorelement geschraubt, vorgebohrt und geklebt, geschweißt oder gelötet sein. Beide stabförmigen Elemente können bevorzugt einen kreisförmigen Querschnitt aufweisen. An dem Axialaktuatorelement kann in der Verlängerung der Längsachse in Richtung Einspannabschnitt ein Federelement oder eine Feder angeordnet sein, sodass bei einer Verschiebung des Axialaktuatorelements aus einer Ausgangsposition als Verschlussposition in eine Entnahmeposition dieses wieder in diese Ausgangsposition zurückgelenkt wird. Das Federelement bzw. die Feder ist bevorzugt bzgl. des Verbindungselements in Richtung Einspannabschnitt angeordnet.

In einer weiteren vorteilhaften Ausführungsform kann das Axialaktuatorelement entlang der Drehachse des Führungsabschnitts und über die Länge des Führungsabschnitts verlaufen und über eine axiale Bewegung des Betätigungselements das Axialaktuatorelement aus dem Verbindungselement in Richtung Einspannabschnitt verfahrbar sein, so dass eine Verschluss- in eine Freigabestellung und bevorzugt selbstrückstellend in die Verschlussstellung überführbar ist. In einer Freigabestellung kann der Werkzeugkopf vom Werkzeugschaft abmontiert bzw. an den Werkzeugschaft anmontiert werden. Vorteilhafterweise bewegt sich das Betätigungselement beim Loslassen durch eine Bedienperson in die Ausgangsposition, der Verschlussstellung, zurück, sodass das Axialaktuatorelement in das Verbindungselement zurückverschoben wird und den Werkzeugkopf am Werkzeugschaft fixiert. Dies kann über ein Federelement oder eine Feder erfolgen, die in der Achse des Axialaktuatorelements angeordnet ist. Das Betätigungselement kann mittig zwischen dem Führungsabschnitt und dem Einspannabschnitt angebracht sein, wobei die Verbindung zwischen Betätigungselement und Axialaktuatorelement über ein Radialaktuatorelement erfolgt, das ebenso in diesem Bereich angebracht ist. Das Radialaktuatorelement kann in einem Führungsschlitz geführt werden, der ebenso mittig zwischen Einspannabschnitt und Führungsabschnitt in dem Werkzeugschaft angebracht ist. Der Führungsschlitz kann in Achsrichtung des Werkzeugschaftes oder spiralförmig um den Werkzeugschaft verlaufen. Dadurch kann die Übertragung einer Bewegung des Betätigungselements auf das Axialaktuatorelement variiert und eingestellt werden.

In einer weiteren vorteilhaften Ausführungsform kann der Führungsabschnitt einen Zylinderabschnitt umfassen, wobei der Durchmesser des Zylinderabschnitts an den Durchmesser der Durchgangsbohrung angepasst ist. Dieser Abschnitt wird beim Senken oder Entgraten in die Durchgangsbohrung eingeführt und kann nahezu den gleichen Durchmesser wie die Durchgangsbohrung aufweisen. Somit kann eine Senke orthogonal zur Durchgangsbohrung hergestellt werden.

In einer weiteren vorteilhaften Ausführungsform kann ein Oberflächenbereich des Betätigungselements aus einem formweichen Material und / oder als Rändeloberfläche ausgebildet sein. Somit ist das Verschieben des Betätigungselements in eine Verschluss- oder Freigabestellung einfach durch eine Bedienperson möglich, da der Griff eine genügende Haftung aufweist und für die Bedienperson als Betätigungselement erkennbar ist. Der Werkzeugkopf kann durch eine Bedienperson simpel vom Werkzeugschaft gelöst werden.

Gegenstand der Erfindung ist weiterhin ein Verfahren zum Entgraten oder Senken einer Durchgangsbohrung nach dem unabhängigen Anspruch 11 mit einem erfindungsgemäßen Senkwerkzeug.

Es wird vorgeschlagen, dass das Verfahren die folgenden Schritte umfasst:
- Einspannen des Werkzeugschafts in eine Werkzeugmaschine bei entnommenem Werkzeugkopf;
- Zumindest teilweise Einführung des Werkzeugschafts mit Führungsabschnitt in eine Durchgangsbohrung eines Werkstücks, sodass der Führungsabschnitt mit dem Verbindungselement an der Seite des Werkzeugkopfes über die Durchgangsbohrung übersteht;
- Axiales Verschieben des Betätigungselements (30) relativ zum Führungsabschnitt zur Einnahme einer Freigabestellung des Betätigungselements;
- Aufstecken des Werkzeugkopfs von einer der Werkzeugmaschine abgewandten Seite des Werkstücks auf das Verbindungselement des Werkzeugschafts;
- Zurückschieben oder Loslassen des Betätigungselements, sodass das Betätigungselement in eine Verschlussstellung überführt wird;
- Ausführen der Senke zum Entgraten oder Senken der Durchgangsbohrung, durch Betätigung der Werkzeugmaschine;
- Axiales Verschieben des Betätigungselements relativ zum Führungsabschnitt in die Freigabestellung und Lösen des Werkzeugkopfs vom Werkzeugschaft; Herausnehmen des Werkzeugschafts aus der Durchgangsbohrung.

Ein derartiges Verfahren ermöglicht es, den Werkzeugkopf vom Werkzeugschaft von einer Position von der Seite der Werkzeugmaschine zu lösen. Anschließend kann der Werkzeugkopf vom Werkzeugschaft von einer der Werkzeugmaschine abgewandten Seite des Werkstücks abgezogen werden. Die Verbindungsstelle zwischen Werkzeugkopf und Werkzeugschaft befindet sich im eingebauten Zustand in einem Werkstück bevorzugt näher an der Oberfläche des Werkstücks, die der Werkzeugmaschine abgewandt ist. Nach Durchführung der Senkung bzw. nach dem Entgraten kann der Werkzeugkopf vom Werkzeugschaft durch eine Verschiebung des Betätigungselements wieder gelöst werden. Danach kann das Verfahren an weiteren Durchgangsbohrungen widerholt werden. Der Werkzeugkopf kann durch ein Zurückschieben des Betätigungselements von einer Freigabestellung in die Ausgangsposition, d. h. in die Verschlussstellung, bzw. durch Loslassen des Betätigungselements erneut an dem Werkzeugschaft fixiert werden.

### ZEICHNUNGEN

Weitere Vorteile ergeben sich aus der vorliegenden Zeichnungsbeschreibung. In der Zeichnung sind Ausführungsbeispiele der Erfindung dargestellt.

Es zeigen:
- **Fig. 1**: eine Ausführungsform eines erfindungsgemäßen Senkwerkzeugs vor Montage des Werkzeugkopfes;
- **Fig. 2**: die Ausführungsform des erfindungsgemäßen Senkwerkzeugs nach Fig. 1 nach der Montage des Werkzeugkopfes;
- **Fig. 3**: die Ausführungsform des erfindungsgemäßen Senkwerkzeugs nach Fig. 1 vor Montage des Werkzeugkopfes;
- **Fig. 4**: einen Anschlag in drei Ansichten einer Ausführungsform des Werkzeugkopfs;
- **Fig. 5**: eine Rändelmutter einer Ausführungsform in vier Ansichten;
- **Fig. 6**: ein Betätigungselement in drei Ansichten einer Ausführungsform;
- **Fig. 7**: ein Axial- und Radialaktuatorelement in drei Ansichten einer Ausführungsform;
- **Fig. 8**: ein Fräskopf in fünf Ansichten einer Ausführungsform;
- **Fig. 9**: ein Werkzeugschaft in fünf Ansichten einer Ausführungsform;
- **Fig. 10**: eine Ausführungsform eines erfindungsgemäßen Senkwerkzeug im bestimmungsgemäßen Gebrauch in einer Durchgangsbohrung vor Montage des Werkzeugkopfes;
- **Fig. 11**: eine Ausführungsform eines erfindungsgemäßen Senkwerkzeug im bestimmungsgemäßen Gebrauch in einer Durchgangsbohrung nach Durchführung der Senke;
- **Fig. 12**: Darstellung eines Befestigungsablaufs eines Werkzeugkopfes an einem Werkzeugschaft in einer Schnittdarstellung einer Ausführungsform;
- **Fig. 13**: Drahtgitterdarstellung einer Ausführungsform eines erfindungsgemäßen Senkwerkzeugs in einer ersten Perspektive;
- **Fig. 14**: Drahtgitterdarstellung der Ausführungsform eines erfindungsgemäßen Senkwerkzeugs nach Fig. 13 in einer zweiten Perspektive.

In den Figuren sind gleiche oder gleichartige Komponenten mit gleichen Bezugszeichen beziffert.

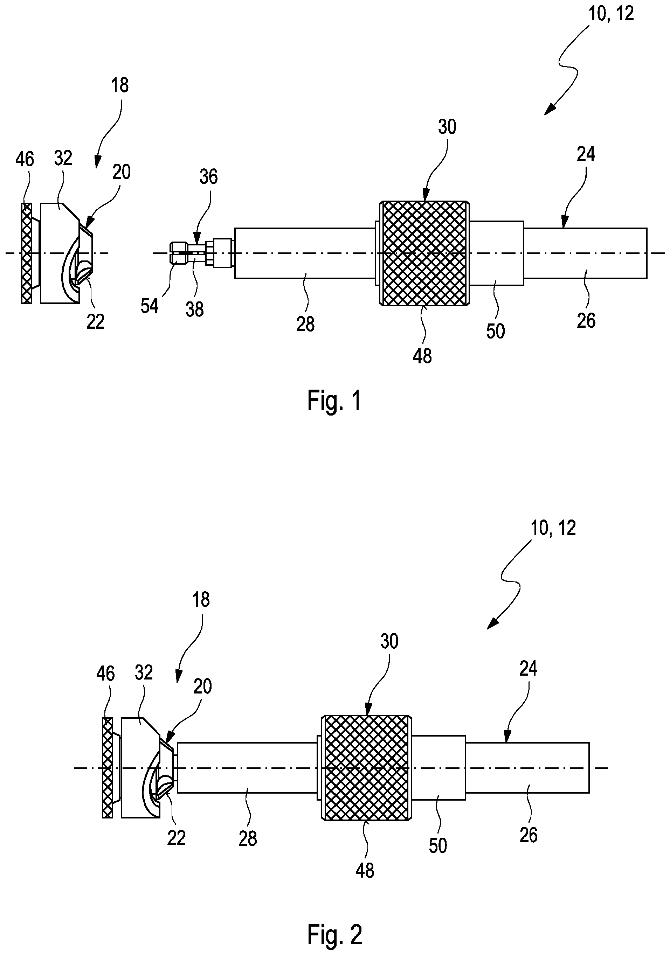

Fig. 1 zeigt eine Ausführungsform eines erfindungsgemäßen Senkwerkzeugs 10 (Rückwärtssenkwerkzeugs 12) vor Montage des Werkzeugkopfes 18 am Werkzeugschaft 24. Das Senkwerkzeugs 10 besteht aus einem Werkzeugkopf 18 und einem Werkzeugschaft 24. Der Werkzeugkopf 18 wird aus einem Fräskopf 20 mit vier Schneidflächen 22, einem Anschlag 32 sowie einer Rändelmutter 46 gebildet. Die Rändelmutter 46 wird auf den Fräskopf 20 aufgeschraubt und in einer gewünschten Position fixiert. Dadurch kann ebenso die Position des Anschlags 32 und somit die Senkungstiefe eingestellt werden. Die Fixierung der Rändelmutter 46 auf dem Fräskopf 20 kann durch eine Klebeverbindung hergestellt werden, um eine gleichbleibende Senkungstiefe zu garantieren. Die Rändelmutter 46 dient zum Halten und Greifen des Werkzeugkopfes 18 durch eine Bedienperson, die den Werkzeugkopf 18 an dem Werkzeugschaft 24 montiert oder demontiert. Der Anschlag 32 ist frei verdrehbar gegenüber dem Fräskopf 20 gelagert. Der Werkzeugschaft 24 besteht aus einem Einspannabschnitt 26, einer Aktuatorlaufabschnitt 50 des Betätigungselements 30, einem Führungsabschnitt 28 sowie einem Verbindungselement 36. Das Verbindungselement 36 wird aus einem geschlitzten Hohlzylinder 38 gebildet. An den Enden des geschlitzten Hohlzylinders 38 sind Wulste 54 angebracht, die zur Arretierung des Werkzeugkopfes 18 an dem Werkzeugschaft 24 dienen. Auf der Aktuatorlaufabschnitt 50 ist ein Betätigungselement 30 aufgeschoben. Das Betätigungselement 30 hat lediglich über ein Radialaktuatorelement (nicht sichtbar in dieser Darstellung) eine feste Verbindung mit dem Werkzeugschaft 24.

Eine Ansicht des Gesamtwerkzeugs 10 nach der Montage des Werkzeugkopfes 18 am Werkzeugschaft 24 zeigt Fig. 2. Das Verbindungselement 36 ist im montierten Zustand nicht mehr sichtbar. In den sonstigen Ausführungen entspricht die Darstellung der aus Fig. 1.

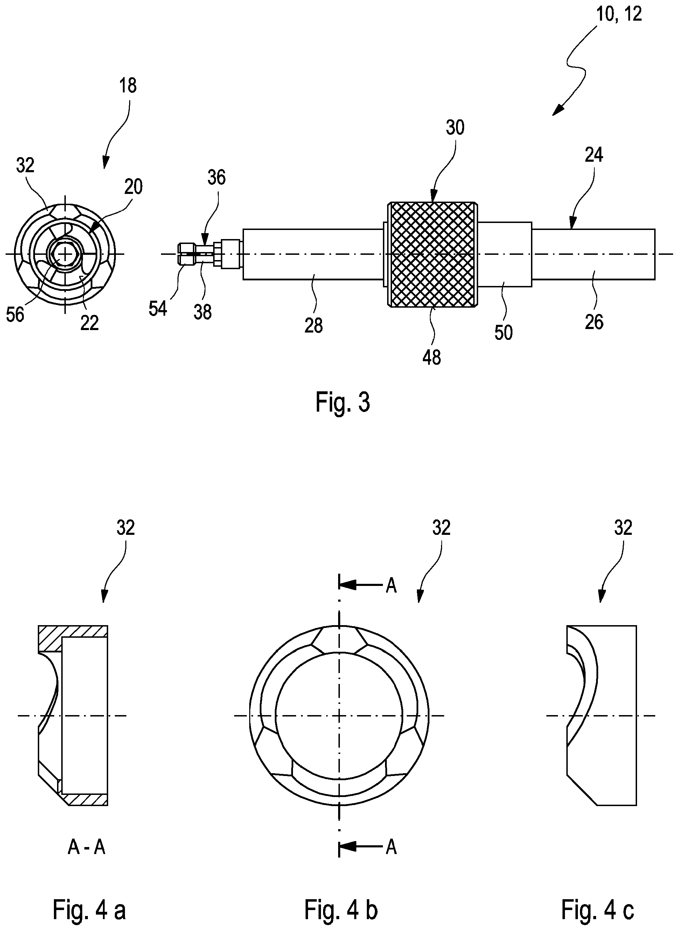

In Fig. 3 ist eine weitere Ansicht der Ausführungsform aus Fig. 1 gezeigt. Der Werkzeugkopf 18 ist in einer Ansicht frontal auf den Fräskopf 20 dargestellt. Der Fräskopf 20 besitzt mittig eine Bohrung 56, die zur Aufnahme des Verbindungselements 36 dient. Der Fräskopf 20 besitzt drei Schneidflächen 22. Außerhalb des Fräskopfes 20 ist ein Anschlag angebracht. Dieser kann durch ein Lager, wie beispielsweise ein Gleit- oder Wälzlager auf dem Fräskopf gelagert sein. Der Anschlag 32 ist frei verdrehbar um den Fräskopf 20 gelagert. In den weiteren Ausführungen entspricht das dargestellte Senkwerkzeug 10, 12 denen aus Fig. 1.

Fig. 4 zeigt eine Ausführungsform eines Anschlags 32 in drei Ansichten. Fig. 4b zeigt eine Draufsicht, Fig. 4a einen Längsschnitt und Fig. 4c eine Seitenansicht. Der Anschlag 32 kann beispielsweise einen Durchmesser von 12,6 mm aufweisen und eine Breite von 4,5 mm besitzen. Auf der dem Werkstück (nicht dargestellt) zugewandten Oberfläche besitzt der Anschlag 32 drei Aussparungen zum Entlass von Bearbeitungsspänen und zur Luftkühlung, sodass nicht über die komplette Oberfläche des Anschlags 32 ein Kontakt mit dem Werkstück hergestellt wird und die Aufsetzfläche verringert ist.

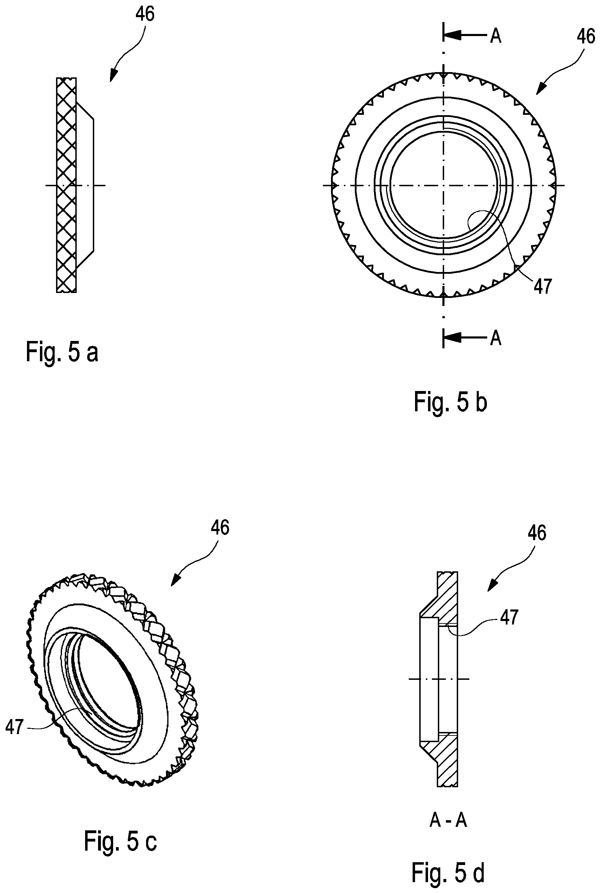

In Fig. 5 ist eine Rändelmutter 46 zur Montage an einem Werkzeugkopf 18 (nicht dargestellt) gezeigt. Fig. 5a, 5b und 5c zeigen jeweils Außenansichten, Fig. 5d eine Schnittdarstellung der Rändelmutter 46. Im Innern der Rändelmutter 46 ist ein Gewinde 47 angebracht, sodass die Rändelmutter 46 auf den Fräskopf 20 (nicht dargestellt) aufgeschraubt werden kann. Die Rändelmutter 46 kann einen Außendurchmesser von 12,6 mm aufweisen und eine Dicke von 2 mm sowie aus einem chromlegierter Vergütungsstahl, beispielsweise X20Cr13 hergestellt sein. Nachdem die Rändelmutter 46 auf dem Fräskopf 20 verschraubt ist, kann diese mit dem Fräskopf 20 verklebt, verschweißt oder mit einer Kontermutter gekontert werden. Die Rändelmutter dient als Haltering des Werkzeugkopfs 18 für eine Bedienperson.

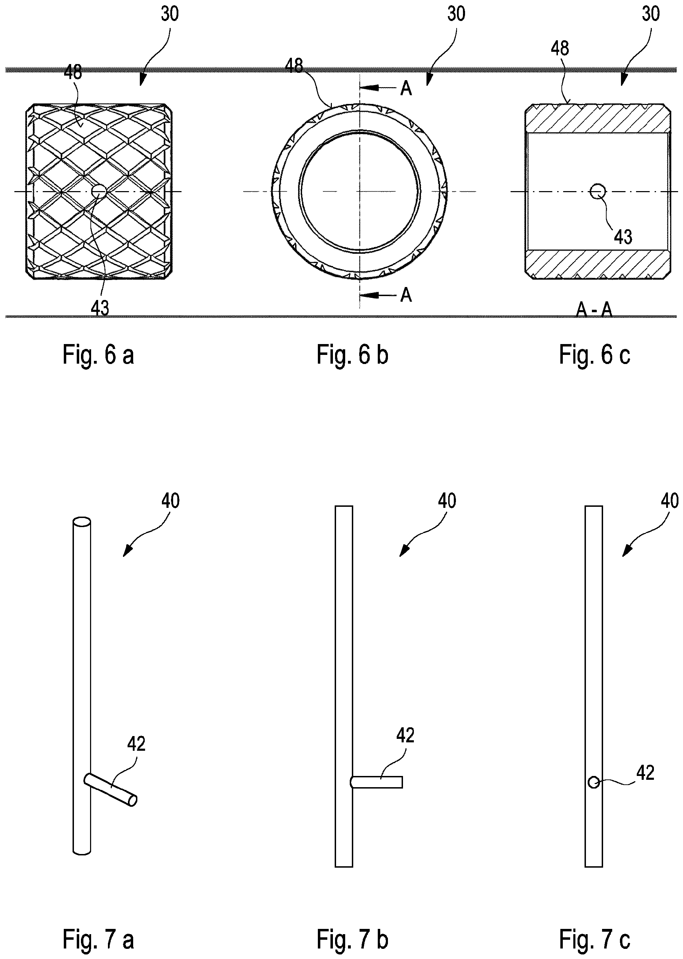

Eine Darstellung eines Betätigungselements 30 zeigt Fig. 6 in zwei Außenansichten, Figs. 6a und 6b, sowie einer Schnittdarstellung, Fig. 6c. In dieser Ausführungsform ist das Betätigungselement 30 in Form einer Rändeloberfläche 48 ausgeführt und besitzt demnach eine strukturierte Oberfläche. Das Betätigungselement 30 kann eine Breite von 10 mm, mittig eine Durchgangsbohrung 43 aufweisen und aus einem farblich eloxiertem Aluminium hergestellt sein. In der Durchgangsbohrung 43 kann das Radialaktuatorelement 42 (nicht dargestellt) eingeklebt, eingeklemmt oder sonst wie form- oder kraftschlüssig aufgenommen werden, um über ein Axialaktuatorelement 40 (nicht dargestellt) eine Verbindung des Betätigungselements 30 zu dem Verbindungselement 36 (nicht dargestellt) herzustellen. Das Betätigungselement 30 besitzt eine glatte Innenoberfläche, sodass der Reibwiderstand zum Führungsabschnitt gering gehalten wird.

Fig. 7 zeigt ein stabförmiges Axialaktuatorelement 40 mit radial abstehendem stabförmigen Radialaktuatorelement 42, das in Wirkverbindung mit dem Betätigungselement 30 aus Fig. 6 stehen kann. Dargestellt ist eine isometrische Darstellung, Fig. 7a, und zwei Seitenansichten, Figs. 7b und 7c. Das Axialaktuatorelement 40 kann als ein Zylinderstift und beispielsweise aus Silberstahl hergestellt sein. Das Radialaktuatorelement 42 kann in das Axialaktuatorelement 40 eingeschraubt oder vorgebohrt und verklebt werden. Die Durchmesser können 2 mm für das Axialaktuatorelement 40 und 1 mm für das Radialaktuatorelement 42 betragen.

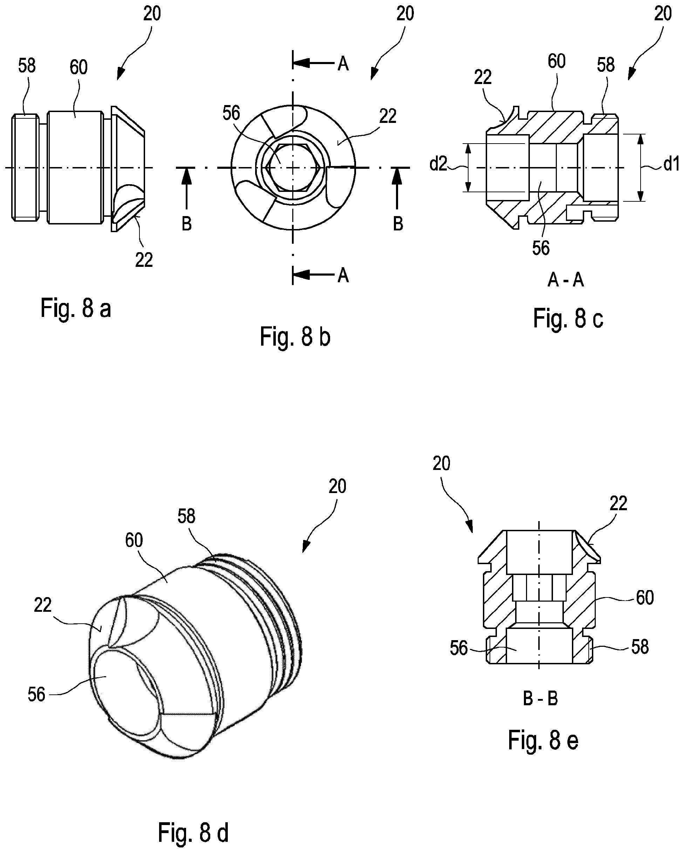

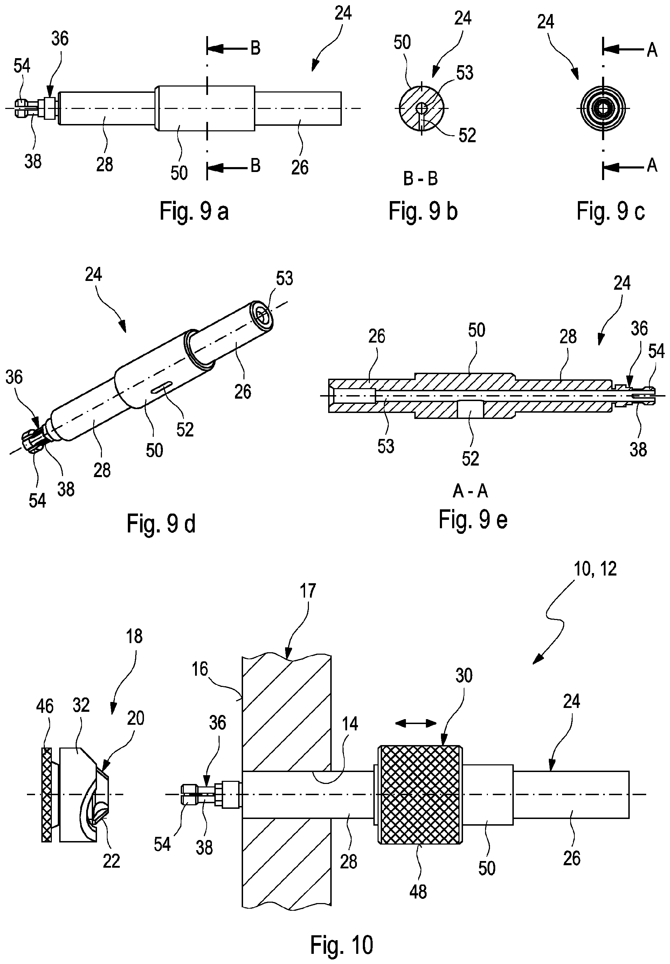

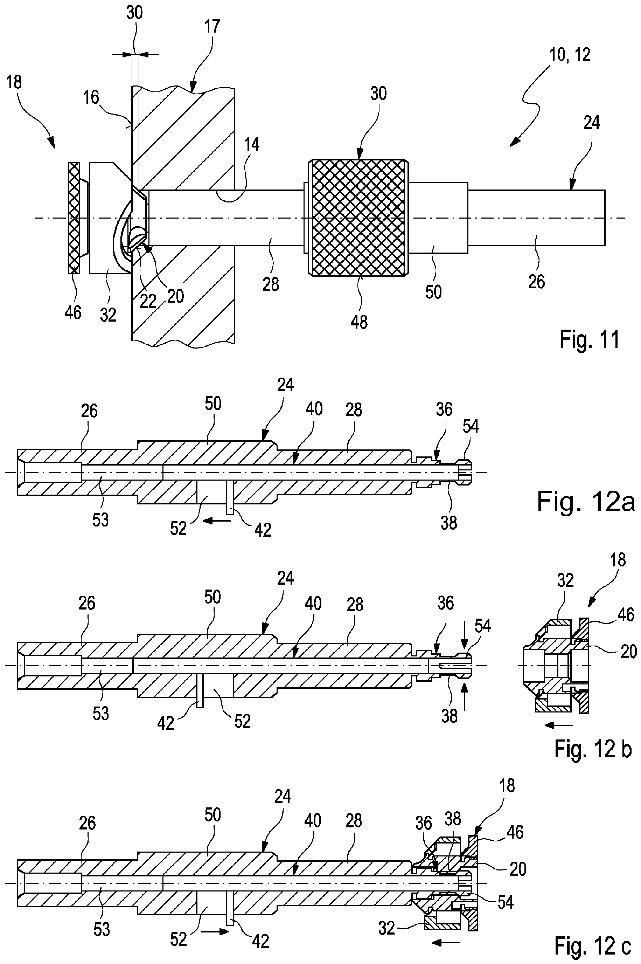

Eine Ausführungsform des Fräskopfes 20 zeigt Fig. 8. Die Figs. 8a, 8b und 8d zeigen Außenansichten, die Figs. 8c und 8e zwei Schnittdarstellungen. Der Fräskopf 20 besitzt mindestens eine Schneidfläche 22 mit einer zugeordneten Schneidkante. In der dargestellten Ausführungsform besitzt der Fräskopf 20 drei Schneidflächen 22, einen Montagebereich 60 für den Anschlag 32 und ein Gewinde 58 zur Montage einer Rändelmutter 46 nach Fig. 5. Diese drei Abschnitte sind durch Freistiche voneinander beabstandet. Im Innern besitzt der Fräskopf 20 eine Bohrung 56. Diese kann über die komplette Länge des Fräskopfes 20 ausgeführt sein. Die Figs. 8c und 8e zeigen, dass die Bohrung 56 unterschiedliche Durchmesser d1 und d2 aufweist. Im Bereich des Gewindes 58 ist der Innendurchmesser d1 der Bohrung 56 größer als im Bereich des Montagebereichs 60. Im Montageberiech 60 kann die Bohrung 56 mit Innendurchmesser d2 einen Innensechskant aufweisen. Die Bohrung 56 mit den unterschiedlichen Innendurchmessern dient zur kraft- und/oder formschlüssigen Lagefixierung des Verbindungselements 36, unter anderem dargestellt in Figs. 9 und 12. Dadurch kann das Verbindungselement 36 und damit der Werkzeugschaft 24 verdrehsicher gegenüber dem Fräskopf 20 und damit dem Werkzeugkopf 18 gelagert werden. Der Fräskopf kann Vakuumgehärtet werden.

Der Werkzeugschaft 24 nach Fig. 9 besitzt einen Einspannabschnitt 26, eine Aktuatorlaufabschnitt 50, einen Führungsabschnitt 28 und ein Verbindungselement 36. Auf die Aktuatorlaufabschnitt 50 kann ein Betätigungselement 30 aufgeschoben werden. Der Durchmesser des Führungsabschnittes 28 kann an den Durchmesser der Durchgangsbohrung 14 angepasst werden. Das Verbindungselement 36 besteht im Wesentlichen aus einem geschlitzten Hohlzylinder 38, wobei bei einem vierfach geschlitzten Hohlzylinder 38 nach Fig. 9 vier Teilabschnitte entstehen. Jeder Teilabschnitt ist mit einem Wulst 54 versehen, der zur form- und kraftschlüssigen Arretierung des Verbindungselements 36 im Werkzeugkopf 18 dient. Im Innern weist der Werkzeugschaft 24 eine Durchgangsbohrung 53 zur Aufnahme eines Axialaktuatorelements nach Fig. 7 auf. In der Schnittdarstellung Fig. 9e sowie der isometrischen Darstellung Fig. 9d ist der Führungsschlitz 52 sichtbar, der den axialen Verfahrweg des Radialaktuatorelements 42 auf dem Aktuatorlaufabschnitt 50 definiert. Der Werkzeugschaft 24 kann aus einem chromlegierter Vergütungsstahl, beispielsweise X20Cr13 hergestellt werden. Zur Montage kann zunächst das Axialaktuatorelement 40 in die Durchgangsbohrung 53 eingeführt, hiernach das Betätigungselement 30 auf den Aktuatorlaufabschnitt 50 aufgeschoben und schließlich das Radialaktuatorelement 42 durch die Bohrung 43 des Betätigungselements 30 geschoben und in axialverschieblicher Wirkverbindung zum Axialaktuatorelement 30 gebracht werden.

Fig. 10 zeigt einen Werkzeugschaft 24 in Gebrauchsstellung in einer Durchgangsbohrung 14 eines Werkstücks 17. Die Durchgangsbohrung 14 ist als Schnittdarstellung dargestellt, das Rückwärtssenkwerkzeug 10 in Außenansicht. Der Durchmesser des Führungsabschnitts 28 ist an den Durchmesser der Durchgangsbohrung 14 angepasst, so dass eine lagefixierte Senkbearbeitung gewährleistet ist. Von einer der Einführrichtung des Werkzeugschafts 24 abgewandten Oberflächenseite 16 des Werkstückes 17 kann der Werkzeugkopf 18 an den Werkzeugschaft 24 aufgesetzt und befestigt werden. Das Verbindungselement 36 des Werkzeugschafts 24 steht dafür über diese Oberfläche 16 über. Durch eine in Richtung Werkzeugmaschine gerichtete Verschiebebewegung des Betätigungselements 30 kann das Verbindungselement 36 freigegeben werden und der Werkzeugkopf 18 aufgesteckt werden. Nach Loslassen des federgelagerten Betätigungselements 30 bzw. ein Verschieben in Richtung Werkzeugkopf 18 verschiebt sich dieses in die Verschlussstellung zurück, wodurch eine drehfeste Befestigung des Werkzeugkopfes 18 am Werkzeugschaft 24 erfolgt. Dieses Freigeben und Sperren des Verbindungselements 36 erfolgt über ein axiales Verschieben eines Axialaktuatorelements 40 nach Fig. 7. Durch den Führungsschlitz 52 im Werkzeugschaft 24, dargestellt in Fig. 9, ist das Betätigungselement 30 mit dem Axialaktuatorelement 40 verbunden. Der Führungsschlitz 52 erlaubt eine Verschiebung des Betätigungselements 30 in Längsrichtung des Werkzeugschafts 24. Ebenso könnte der Führungsschlitz 52 wendelförmig um den Werkzeugschaft 24 verlaufen. Von der in Fig. 10 dargestellten Konfiguration kann von rechts eine Werkzeugmaschine an dem Einspannabschnitt 26 montiert werden.

Fig. 11 zeigt den Zustand nach dem Entgraten oder Senken der Durchgangsbohrung 14 des Werkstücks 17 mit einem Senkwerkzeug 10. Durch eine Ziehbewegung einer Werkzeugmaschine kann das Senkwerkzeug 10 gegen die Oberfläche 16 gedrückt werden und so eine Senkbearbeitung mit einer Senkungstiefe 34 durchführen. Die Senkungstiefe 34 kann durch den Anschlag 32 eingestellt werden, wobei der Anschlag 32 durch die Rändelmutter 46 relativ zum Fräskopf 20 positioniert werden kann. Nach der Erstellung der Versenkung kann der Werkzeugkopf 18 somit vom Werkzeugschaft 24 gelöst werden, indem das Betätigungselement 30 erneut in Richtung Einspannabschnitt 26 in die Freigabestellung, verschoben wird. Durch die Verschiebung des Betätigungselements 30 gibt das Axialaktuatorelement 40 (nicht sichtbar) das Verbindungselement 36 frei und der Werkzeugkopf 18 kann abgezogen werden. Die Rändelmutter 46 am Werkzeugkopf erleichtert das Abziehen des Werkzeugkopfes 18 durch eine Bedienperson.

Die Schnittdarstellungen aus Fig. 12 zeigen einen detaillierten Ablauf durch diese Verschiebung durch das Betätigungselement 30 im Innern des Senkwerkzeugs 10. Fig. 12a zeigt den Ausgangszustand. Das Betätigungselement 30 (nicht dargestellt) befindet sich in der Ausgangsposition bzw. der Verschlussstellung, wodurch das Axialaktuatorelement 40 das Verbindungselement 36 sperrt. Fig. 12b zeigt den Zustand nach Verschieben des Betätigungselements 30 in eine Freigabestellung in Richtung Einspannabschnitt 26, wobei durch das Radialaktuatorelement 42 das Axialaktuatorelement 40 nach (in dieser Ansicht) links verschoben wird und das Verbindungselement 36 freigibt. Dadurch können die einzelnen Elemente des Verbindungselements 36, die durch den geschlitzten Hohlzylinder 38 gebildet werden, radial aufeinander zubewegt werden, dargestellt mit der Richtung der zwei Pfeile. Dadurch verkleinert sich der Außendurchmesser des Verbindungselements 36, sodass der Werkzeugkopf 18 aufgesteckt werden kann. Nach Aufstecken der Werkzeugkopfes 18 kann das Betätigungselement 30 losgelassen werden, wodurch dieses in die Ausgangsposition zurückfährt, Fig. 12c und kraft- und/oder formschlüssig den Fräskopf 20 drehfest befestigt. Dies entspricht der Verschlussstellung. Der Wulst 54 befindet sich im eingebauten Zustand des Werkzeugkopfes 18 in dem Bereich der Bohrung 56 mit dem Durchmesser d2 nach Fig. 8c. des Fräskopfs 20 Der an den Wulst 54 anschließende Bereich des geschlitzten Hohlzylinders 38 des Verbindungselements 36 befindet sich in dem Bereich des Fräskopfs 20 mit dem Durchmesser d1. Nach Loslassen des Betätigungselements 30 wird das Innere des Verbindungselements 36 durch das Axialaktuatorelement 40 ausgefüllt, sodass sich die einzelnen Elemente des Verbindungselements 36 nicht mehr aufeinander zubewegen können. Dadurch wird der Werkzeugschaft 24 mit dem Werkzeugkopf 18 drehfest arretiert. Eine Rotationsbewegung des Fräskopfes 20 relativ zum Werkzeugschaft 24 wird dadurch verhindert, dass ein Innensechskant in der Bohrung 56 des Fräskopfes 20 angebracht ist, in den die einzelnen Elemente des geschlitzten Hohlzylinders 38 eingreifen und formschlüssig ein Verdrehen verhindern.

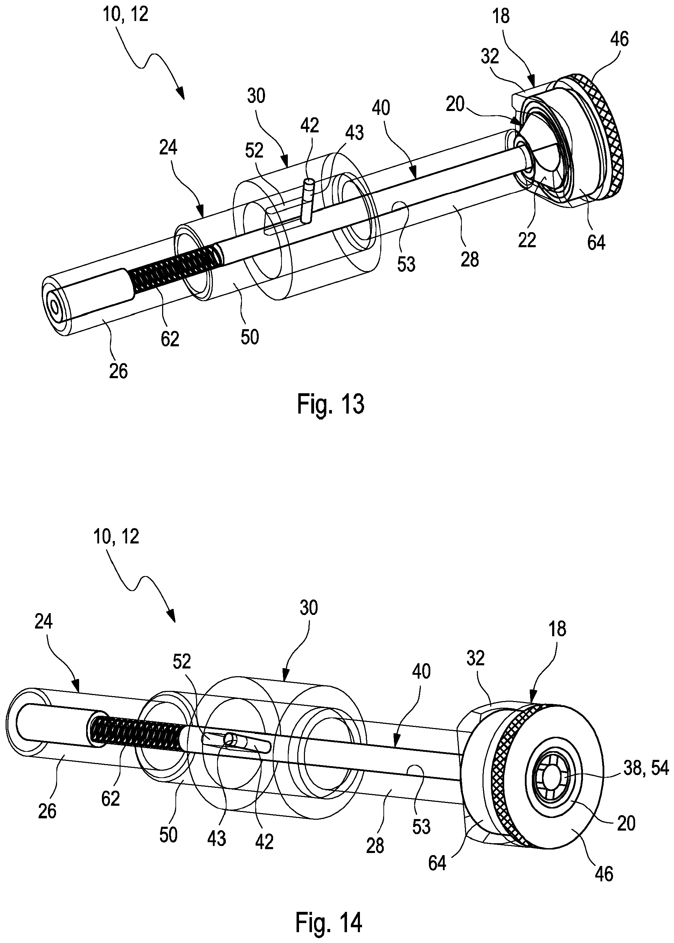

Die Figs. 13 und 14 zeigen Drahtgitterdarstellungen einer Ausführungsform eines erfindungsgemäßen Senkwerkzeugs 10 in zwei unterschiedlichen Perspektiven. Hierbei wird speziell die Verbindung zwischen Betätigungselement 30 und Axialaktuatorelement 40 über das Radialaktuatorelement 42 sichtbar. Damit das Betätigungselement 30, nach einer Verschiebung durch eine Bedienperson weg vom Werkzeugkopf 18, wieder in die Ausgangsposition zurückgefahren wird, ist eine Feder 62 an einem Ende des Axialaktuatorelements 40 angebracht. Die Feder 62 ist am freien axialen Ende des Einspannabschnitts 26 in einer Einschraubhülse aufgenommen und gelagert. Die Feder 62 bewirkt ein selbsttätiges Verstellen des Axialaktuatorelements 40 in die Verschlussstellung. Der Aufbau des Werkzeugkopfs 18 zeigt, dass zwischen dem Anschlag 32 und dem Montagebereich 60 des Fräskopfes 20 ein Gleit- oder Wälzlager 64 angebracht ist, um eine freie Drehbarkeit des Anschlags 32 gegenüber dem Fräskopf 20 zu ermöglichen. Dadurch wird eine Rotation des Fräskopfes 20 relativ zum Anschlag 32 ermöglicht. Bei Erstellung einer Senkvertiefung oder beim Entgraten einer Durchgangsbohrung 14 kann der Anschlag 32 auf das Werkstück 17 aufsetzen und unbewegt verbleiben, währen der Fräskopf 20 die rotatorische Arbeitsbewegung durchführt.

### Bezugszeichenliste

- 10: Senkwerkzeug
- 12: Rückwärtssenkwerkzeug
- 14: Durchgangsbohrung
- 16: Oberfläche
- 17: Werkstück
- 18: Werkzeugkopf
- 20: Fräskopf
- 22: Schneidfläche
- 24: Werkzeugschaft
- 26: Einspannabschnitt
- 28: Führungsabschnitt
- 30: Betätigungselement
- 32: Anschlag
- 34: Senkungstiefe
- 36: Verbindungselement
- 38: Hohlzylinder
- 40: Axialaktuatorelement
- 42: Radialaktuatorelement
- 43: Bohrung für das Radialaktuatorelement

- 46: Rändelmutter
- 47: Gewinde
- 48: Rändeloberfläche
- 50: Aktuatorlaufabschnitt
- 52: Führungsschlitz
- 53: Durchgangsbohrung
- 54: Wulst
- 56: Bohrung
- 58: Gewinde
- 60: Montagebereich für Anschlag
- 62: Feder
- 64: Lager

## Patentansprüche

1. Mehrteiliges Senkwerkzeug (10) zur Einspannung in eine Werkzeugmaschine und zum Senken oder Entgraten von Durchgangsbohrungen (14) in geraden, abgewinkelten oder gekrümmten Oberflächen (16) eines Werkstücks (17), wobei die Oberflächen (16) auf einer der Werkzeugmaschine abgewandten Seite angeordnet sind, umfassend einen Werkzeugkopf (18) mit einem Fräskopf (20) mit zumindest einer, insbesondere vier Schneidflächen (22) sowie einem Werkzeugschaft (24) mit einem Einspannabschnitt (26) zur Einspannung in einer Werkzeugmaschine und einem Führungsabschnitt (28) zur Führung in einer Durchgangsbohrung (14) mit einem Betätigungselement (30), wobei der Werkzeugkopf (18) und der Werkzeugschaft (24) lösbar miteinander verbunden sind, und ein Lösen von Werkzeugkopf (18) und Werkzeugschaft (24) durch eine Aktuatorbewegung des Betätigungselements (30) erfolgt und der Fräskopf (20) im verbundenen Zustand verdrehsicher gegenüber dem Werkzeugschaft (24) gelagert ist, wobei der Führungsabschnitt (28) an einem dem Werkzeugkopf (18) zugewandten axialen Ende ein im Durchmesser vom Führungsabschnitt abgesetztes Verbindungselement (36) aufweist, und das Verbindungselement (36) einen radialen Aufweitungsbereich umfasst, dessen Radius durch das Betätigungselement (30) veränderbar ist, und das Verbindungselement (36) in den Werkzeugkopf (18), bevorzugt in den Fräskopf (20), eingreift, um die lösbare Verbindung herzustellen, so dass der Werkzeugkopf (18) an verschiedene Werkzeugschäfte (24) mit unterschiedlichen Durchmessern anbringbar ist,
**dadurch gekennzeichnet, dass** das Senkwerkzeug als mehrteiliges Rückwärtssenkwerkzeug ausgebildet ist, und dass das Betätigungselement zwischen Einspannabschnitt und Führungsabschnitt angeordnet und manuell betätigbar ist.

2. Senkwerkzeug (10) nach Anspruch 1, **dadurch gekennzeichnet, dass** das Betätigungselement (30) in der Aktuatorbewegung längsaxial von einer Verschlussstellung in eine Freigabestellung verschieblich ist, und bevorzugt in der Verschlussstellung federgelagert und selbstrückstellend aus der Freigabestellung in die Verschlussstellung überführbar ist.

3. Senkwerkzeug (10) nach einem der vorhergehenden Ansprüche, **dadurch gekennzeichnet, dass** der Werkzeugkopf (18) einen Anschlag (32) zur Definition einer Senkungstiefe (34) umfasst, wobei der Anschlag (32) frei verdrehbar und bevorzugt axial verstellbar gegenüber dem Fräskopf (20) gelagert ist.

4. Senkwerkzeug (10) nach Anspruch 3, **dadurch gekennzeichnet, dass** der Werkzeugkopf (18) an seiner Stirnseite eine Verstellmutter, insbesondere eine Rändelmutter (46) an einer dem Fräskopf (20) abgewandten Seite umfasst, mittels der eine Anschlagtiefe des Anschlags (32) einstellbar ist.

5. Senkwerkzeug (10) nach einem der vorgenannten Ansprüche, **dadurch gekennzeichnet, dass** durch eine axiale Relativbewegung das Betätigungselements (30) aus einer, bevorzugt federgelagerten, Verschlussstellung entgegen dem Führungsabschnitt (28) in Richtung Einspannabschnitt (26) in eine Freigabestellung verfahrbar ist, bei der der Werkzeugkopf (18) von dem Werkzeugschaft (24) gelöst werden kann.

6. Senkwerkzeug (10) nach einem der vorgenannten Ansprüche, **dadurch gekennzeichnet, dass** das Verbindungselement (36), insbesondere der radiale Aufweitungsbereich als Hohlzylinder (38), mindestens einfach geschlitzter Hohlzylinder (38), bevorzugt als vierfach geschlitzter Hohlzylinder (38) und / oder als Spreizelement ausgebildet ist.

7. Senkwerkzeug (10) nach einem der vorgenannten Ansprüche, **dadurch gekennzeichnet, dass** in das Verbindungselement (36) ein stabförmiges Axialaktuatorelement (40) eingreift, das mit dem Betätigungselement (30) über ein Radialaktuatorelement (42) in einem axialverschieblichen Wirkeingriff steht.

8. Senkwerkzeug (10) nach Anspruch 5 und Anspruch 7, **dadurch gekennzeichnet, dass** das Axialaktuatorelement (40) entlang der Drehachse des Führungsabschnitts (28) und über die Länge des Führungsabschnitts (28) verläuft und über eine axiale Bewegung des Betätigungselements (30) das Axialaktuatorelement (40) aus dem Verbindungselement (36) in Richtung Einspannabschnitt (26) verfahrbar ist, so dass eine Verschluss- in eine Freigabestellung und bevorzugt selbstrückstellend in die Verschlussstellung überführbar ist.

9. Senkwerkzeug (10) nach einem der vorgenannten Ansprüche, **dadurch gekennzeichnet, dass** der Führungsabschnitt (28) einen Zylinderabschnitt umfasst, wobei der Durchmesser des Zylinderabschnitts an den Durchmesser der Durchgangsbohrung (14) angepasst ist.

10. Senkwerkzeug (10) nach einem der vorgenannten Ansprüche, **dadurch gekennzeichnet, dass** ein Oberflächenbereich des Betätigungselements (30) aus einem formweichen Material und / oder als Rändeloberfläche (48) ausgebildet ist.

11. Verfahren zum Entgraten oder Senken einer Durchgangsbohrung (14) mit einem Senkwerkzeug (10) nach einem der vorgenannten Ansprüche, umfassend die folgenden Schritte:
- Einspannen des Werkzeugschafts (24) in eine Werkzeugmaschine bei entnommenem Werkzeugkopf (18);
- Zumindest teilweise Einführung des Werkzeugschafts (24) mit Führungsabschnitt (28) in eine Durchgangsbohrung (14) eines Werkstücks (17), sodass der Führungsabschnitt (28) mit dem Verbindungselement (36) an der Seite des Werkzeugkopfes (18) über die Durchgangsbohrung (14) übersteht;
- Axiales Verschieben des Betätigungselements (30) relativ zum Führungsabschnitt (28) zur Einnahme einer Freigabestellung des Betätigungselements (30);
- Aufstecken des Werkzeugkopfs (18) von einer der Werkzeugmaschine abgewandten Seite des Werkstücks (17) auf das Verbindungselement (36) des Werkzeugschafts (24);
- Zurückschieben des Betätigungselements (30), sodass das Betätigungselement (30) in eine Verschlussstellung überführt wird;
- Ausführen der Senke zum Entraten oder Senken der Durchgangsbohrung (14), durch Betätigung der Werkzeugmaschine;
- Axiales Verschieben des Betätigungselements (30) relativ zum Führungsabschnitt (28) in die Freigabestellung und Lösen des Werkzeugkopfs (18) vom Werkzeugschaft (24); Herausnehmen des Werkzeugschafts (24) aus der Durchgangsbohrung (14).

## Claims

1. Multi-piece countersinking tool (10) for clamping into a machine tool and for countersinking or deburring of through bores (14) in straight, angled or curved surfaces (16) of a workpiece (17), wherein the surfaces (16) are arranged on a side facing away from the machine tool, comprising a tool head (18) with a milling head (20) with at least one, in particular four, cutting faces (22) as well as a tool shank (24) with a clamping section (26) for clamping into a machine tool and a guide section (28) for guiding in a through bore (14) with an actuating element (30), wherein the tool head (18) and the tool shank (24) are detachably connected to one another, and a detachment of tool head (18) from tool shank (24) is carried out by an actuating motion of the actuating element (30), and the milling head (20), in the connected state, is mounted so as to be secure against rotation with respect to the tool shank (24), wherein the guide section (28), at an axial end facing the tool head (18), has a connecting element (36) stepped in diameter from the guide section, and the connecting element (36) includes a radial expansion region, the radius of which can be varied by the actuating element (30), and the connecting element (36) engages into the tool head (18), preferably into the milling head (20), in order to produce the detachable connection, so that the tool head (18) can be attached to various tool shanks (24) of different diameters, **characterized in that** the countersinking tool is designed as a multi-piece backward countersinking tool and **in that** the actuating element is arranged between the clamping section and the guide section and can be actuated manually.

2. Countersinking tool (10) according to claim 1, **characterized in that** the actuating element (30) is displaceable in the direction of the longitudinal axis during the actuating motion from a locking position into a release position, and is preferably spring-mounted in the locking position and can be transferred in a self-resetting manner from the release position into the locking position.

3. Countersinking tool (10) according to one of the aforementioned claims, **characterized in that** the tool head (18) comprises a stop (32) for defining a countersink depth (34), wherein the stop (32) is freely rotatable and preferably axially adjustable with respect to the milling head (20).

4. Countersinking tool (10) according to claim 3, **characterized in that** the tool head (18), on the front side thereof, comprises an adjusting nut, in particular a knurled nut (46), on a side facing away from the milling head (20), by means of which an abutment depth of the stop (32) can be adjusted.

5. Countersinking tool (10) according to one of the aforementioned claims, **characterized in that**, by means of an axial relative motion, the actuating element (30) can be moved out of a, preferably spring-mounted, locking position against the guide section (28) in the direction of the clamping section (26) into a release position (26) in which the tool head (18) can be detached from the tool shank (24).

6. Countersinking tool (10) according to one of the aforementioned claims, **characterized in that** the connecting element (36), in particular the radial expansion region, is designed as a hollow cylinder (38), at least a single-slotted hollow cylinder (38), preferably as a quadruple-slotted hollow cylinder (38) and/or as a spreader element.

7. Countersinking tool (10) according to one of the aforementioned claims, **characterized in that** a rod-shaped axial actuating element (40) engages into the connecting element (36) and is in axially displaceable operative engagement with the actuating element (30) via a radial actuating element (42).

8. Countersinking tool (10) according to claim 5 and claim 7, **characterized in that** the axial actuating element (40) runs along the axis of rotation of the guide section (28) and over the length of the guide section (28) and, via an axial motion of the actuating element (30), the axial actuating element (40) can be moved out of the connecting element (36) in the direction of the clamping section (26), so that a locking position can be transferred into a release position and, preferably, in a self-resetting manner into the locking position.

9. Countersinking tool (10) according to one of the aforementioned claims, **characterized in that** the guide section (28) comprises a cylinder section, wherein the diameter of the cylinder section is adapted to the diameter of the through bore (14).

10. Countersinking tool (10) according to one of the aforementioned claims, **characterized in that** a surface area of the actuating element (30) is made of a dimensionally soft material and/or is formed as a knurled surface (48).

11. Method for deburring or countersinking of a through bore (14) with a countersinking tool (10) according to one of the aforementioned claims, comprising the following steps of:
- clamping the tool shank (24) into a machine tool with the tool head (18) being removed;
- at least partially inserting the tool shank (24) with guide section (28) into a through bore (14) of a workpiece (17) so that the guide section (28) with the connecting element (36) on the side of the tool head (18) protrudes beyond the through bore (14);
- axially displacing the actuating element (30) relative to the guide section (28) so that the actuating element (30) assumes a release position;
- fitting the tool head (18) from a side of the workpiece (17) facing away from the machine tool onto the connecting element (36) of the tool shank (24);
- pushing back the actuating element (30) so that the actuating element (30) is transferred into a locking position;
- carrying out the countersink for deburring or countersinking of the through bore (14) by actuation of the machine tool;
- axially displacing the actuating element (30) relative to the guide section (28) into the release position and releasing the tool head (18) from the tool shank (24);
- removing the tool shank (24) from the through bore (14).

## Revendications

1. Outil de lamage en plusieurs parties (10) destiné à être serré dans une machine-outil et pour le lamage ou l'ébavurage de trous débouchant (14) dans des surfaces (16) droites, angulaires ou courbes d'une pièce à usiner (17), dans lequel les surfaces (16) sont disposées sur un côté détourné de la machine-outil, comprenant une tête d'outil (18) avec une tête de fraisage (20) avec au moins une, en particulier quatre, faces coupantes (22) ainsi qu'une tige d'outil (24) avec une section de serrage (26) conçue pour être serrée dans une machine-outil et une section de guidage (28) conçue pour être guidée dans un trou débouchant (14) avec un élément d'actionnement (30), dans lequel la tête d'outil (18) et la tige d'outil (24) sont reliées entre elles de manière détachable, et un détachement de la tête d'outil (18) de la tige d'outil (24) est effectuée par un mouvement actionneur de l'élément d'actionnement (30), et la tête de fraisage (20), une fois reliée, est montée sans possibilité de rotation par rapport à la tige d'outil (24), dans lequel la section de guidage (28), à une extrémité axiale tournée vers la tête d'outil (18), présente un élément de liaison (36) dont le diamètre est étagé par rapport à la section de guidage, et l'élément de liaison (36) comprend une zone d'expansion radiale, dont le rayon peut être modifié par l'élément d'actionnement (30), et l'élément de liaison (36) s'engage dans la tête d'outil (18), de préférence dans la tête de fraisage (20), pour réaliser la liaison détachable, de sorte que la tête d'outil (18) puisse être fixée à différentes tiges d'outil (24) de différents diamètres,
**caractérisé en ce que** l'outil de lamage est conçu comme un outil de lamage en arrière en plusieurs parties et **en ce que** l'élément d'actionnement est disposé entre la section de serrage et la section de guidage et peut être actionné manuellement.

2. Outil de lamage (10) selon la revendication 1, **caractérisé en ce que** l'élément d'actionnement (30) est déplaçable dans la direction de l'axe longitudinal lors du mouvement actionneur d'une position de verrouillage à une position de libération, et de préférence est monté sur ressort dans la position de verrouillage et peut être transféré par auto-repositionnement de la position de libération à la position de verrouillage.

3. Outil de lamage (10) selon l'une des revendications précédentes, **caractérisé en ce que** la tête d'outil (18) comprend une butée (32) pour définir une profondeur de lamage (34), dans lequel la butée (32) est librement rotative et de préférence réglable axialement par rapport à la tête de fraisage (20).

4. Outil de lamage (10) selon la revendication 3, **caractérisé en ce que** la tête d'outil (18) comprend, sur sa face avant, un écrou de réglage, en particulier un écrou moleté (46), sur un côté détourné de la tête de fraisage (20), au moyen duquel une profondeur de contre-appui de la butée (32) peut être réglée.

5. Outil de lamage (10) selon l'une des revendications précédentes, **caractérisé en ce que**, par un mouvement relatif axial, l'élément d'actionnement (30) peut être déplacé d'une position de verrouillage, de préférence montée sur ressort, contre la section de guidage (28) en direction de la section de serrage (26), à une position de libération (26) dans laquelle la tête d'outil (18) peut être détachée de la tige d'outil (24).

6. Outil de lamage (10) selon l'une des revendications précédentes, **caractérisé en ce que** l'élément de liaison (36), en particulier la zone d'expansion radiale, est conçu comme un cylindre creux (38), au moins comme un cylindre creux (38) à une fente, de préférence comme un cylindre creux (38) à quatre fentes et/ou comme un élément écarteur.

7. Outil de lamage (10) selon l'une des revendications précédentes, **caractérisé en ce qu'**un élément d'actionnement axial (40) en forme de bâton s'engage dans l'élément de liaison (36) et est en engagement actif de manière déplaçable axialement avec l'élément d'actionnement (30) par l'intermédiaire d'un élément d'actionnement radial (42).

8. Outil de lamage (10) selon la revendication 5 et la revendication 7, **caractérisé en ce que** l'élément d'actionnement axial (40) s'étend le long de l'axe de rotation de la section de guidage (28) et sur la longueur de la section de guidage (28), et l'élément d'actionnement axial (40) peut être déplacé hors de l'élément de liaison (36) en direction de la section de serrage (26) par un mouvement axial de l'élément d'actionnement (30), de sorte qu'une position de verrouillage puisse être transférée dans une position de libération et, de préférence par auto-repositionnement, dans la position de verrouillage.

9. Outil de lamage (10) selon l'une des revendications précédentes, **caractérisé en ce que** la section de guidage (28) comprend une section cylindrique, le diamètre de la section cylindrique étant adapté au diamètre du trou débouchant (14).

10. Outil de lamage (10) selon l'une des revendications précédentes, **caractérisé en ce qu'**une zone de surface de l'élément d'actionnement (30) est constituée d'un matériau souple et/ou est formée comme une surface moletée (48).

11. Procédé d'ébavurage ou de lamage d'un trou débouchant (14) avec un outil de lamage (10) selon l'une des revendications précitées, comprenant les étapes suivantes :
- serrage de la tige d'outil (24) dans une machine-outil, la tête d'outil (18) étant retirée ;
- introduction au moins partielle de la tige d'outil (24) avec la section de guidage (28) dans un trou débouchant (14) d'une pièce à usiner (17), de sorte que la section de guidage (28) avec l'élément de liaison (36) du côté de la tête d'outil (18) fasse saillie sur le trou débouchant (14) ;
- déplacement axiale de l'élément d'actionnement (30) par rapport à la section de guidage (28) de sorte que l'élément d'actionnement (30) prenne une position de libération ;
- enfichage de la tête d'outil (18) depuis un côté de la pièce à usiner (17) détourné de la machine-outil sur l'élément de liaison (36) de la tige d'outil (24) ;
- repoussement de l'élément d'actionnement (30) de sorte que l'élément d'actionnement (30) soit transféré dans une position de verrouillage ;
- réalisation du lamage pour ébavurer ou lamer le trou débouchant (14) par l'actionnement de la machine-outil ;
- déplacement axiale de l'élément d'actionnement (30) par rapport à la section de guidage (28) dans la position de libération et détachement de la tête d'outil (18) de la tige d'outil (24) ;
- retrait de la tige d'outil (24) du trou débouchant (14).
